# EUROPEAN PATENT APPLICATION

(11) **EP 1 634 636 A1**
(43) Date of publication of application: **15.03.2006**
(21) Application number: 05019457.0
(22) Date of filing: 07.09.2005
(51) Int. Cl.: B01D 53/86, B01D 53/88

(54) **Blower for use in an air purification apparatus**

(30) Priority: 08.09.2004 KR 2004071876; 08.09.2004 KR 2004025849 U
(71) Applicant: Sudo Premium Engineering Co., Ltd., Seocho-gu Seoul 137-070 (KR)
(72) Inventor: Kim, Jong Sung, Yeongdeungpo-gu, Seoul (KR)
(74) Representative: Lippich, Wolfgang

(57) **Abstract**

A blower used in an air purification apparatus and the like includes at least one blade for blowing air and an ozone decomposition catalyst layer formed on at least one portion of the blade. The ozone decomposition catalyst layer is formed as follows: the blade is submerged into a liquid containing at least one ozone decomposition catalyst for 30 minutes to an hour and half, then is heated for 4 to 6 hours at 100 to 150°C, and then is calcinated for an hour and half to 2 hours and half at 300 to 550°C.

## Description

The present invention relates to a blower for use in an air purification apparatus or the like; and more particularly, to a blower for blowing air, which is capable of effectively decomposing ozone, generated inevitably in an air purifying operation of an air purification apparatus, by forming an ozone decomposition catalyst layer on a surface of a blade thereof.

Recently, air pollution is getting worse and worse day by day because of increase in emissions of air pollutants, such as motor vehicle exhaust gas, and people stay in a closed indoor space, such as an office, for longer time than before. Therefore, intensive researches and developments for an air purification apparatus for purifying or cleaning indoor air have been conducted.

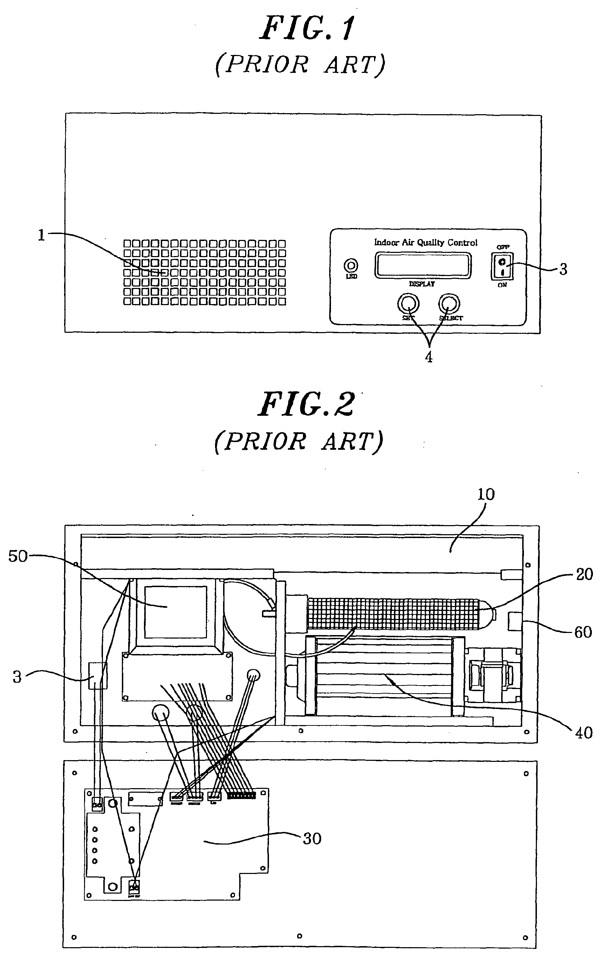

Referring to Figs. 1 and 2, a conventional air purification apparatus using plasma discharges generally includes a filter 10 for dust collection and deodorization, a plasma discharge unit 20, a controller 30 for controlling overall operations thereof, a blower 40 for drawing air in from the outside and blowing a purified air to the outside, a high voltage generator 50 for applying a high voltage to the plasma discharge unit 20, and an air quality sensor 60 for measuring the quality of air drawn in by the blower 40. The air purification apparatus further includes air discharge holes 1 through which the purified air is blown to the outside, a power on/off switch 3 and a plurality of operation buttons 4 for inputting information into the controller 30, wherein all elements are disposed in a front wall of the air purification apparatus.

The plasma discharge unit 20 produces discharges between two electrodes by using the high voltage applied thereto to generate positive and negative ions, or negative ions and ozone, thus performing actions of electric dust collection, deodorization and sterilization. In such air purification apparatuses using plasma discharges, ozone is inevitably generated in the process of generating the positive and negative ions, and is blown to an indoor room along with the purified air by the blower 40.

However, ozone is harmful to human body, so ozone concentration is regulated in Japan to be below 0.06 ppm in living environment and below 0.1 ppm (8 hours in a single day) in working environment. And in Korea, ozone concentration is regulated to be below 0.1 ppm (8 hours in a single day) in working environment.

Therefore, it is necessary to minimize the ozone concentration of air blown from the air purification apparatus, preferably while minimizing air flow blocking effect in the air purification apparatus.

It is, therefore, an object of the present invention to provide a blower for use in an air purification apparatus, which is capable of effectively decomposing ozone generated inevitably in a process of producing negative and positive ions for purifying and cleaning air in the air purification apparatus, while, at the same time, minimizing air flow blocking effect in the air purification apparatus.

In accordance with the present invention, there is provided a blower for use in an air purification apparatus, including: at least one blade for blowing air; and an ozone decomposition catalyst layer formed on at least one portion of the blade. The ozone decomposition catalyst layer is formed as follows: the blade is submerged into a liquid containing at least one ozone decomposition catalyst for 30 minutes to an hour and half, then is heated for 4 to 6 hours at 100 to 150°C, and then is calcinated for an hour and half to 2 hours and half at 300 to 550°C.

The above and other objects and features of the present invention will become apparent from the following description of preferred embodiments given in conjunction with the accompanying drawings, in which:
Fig. 1 is a front view of a conventional air purification apparatus;
Fig. 2 presents an internal structure view of the air purification apparatus shown in Fig. 1 with its rear wall opened;
Fig. 3 illustrates a top view of a blower for use in an air purification apparatus in accordance with a preferred embodiment of the present invention;
Fig. 4 offers a bottom view of the blower shown in Fig. 3; and
Fig. 5 shows a perspective view of a blade assembly of the blower shown in Fig. 3.

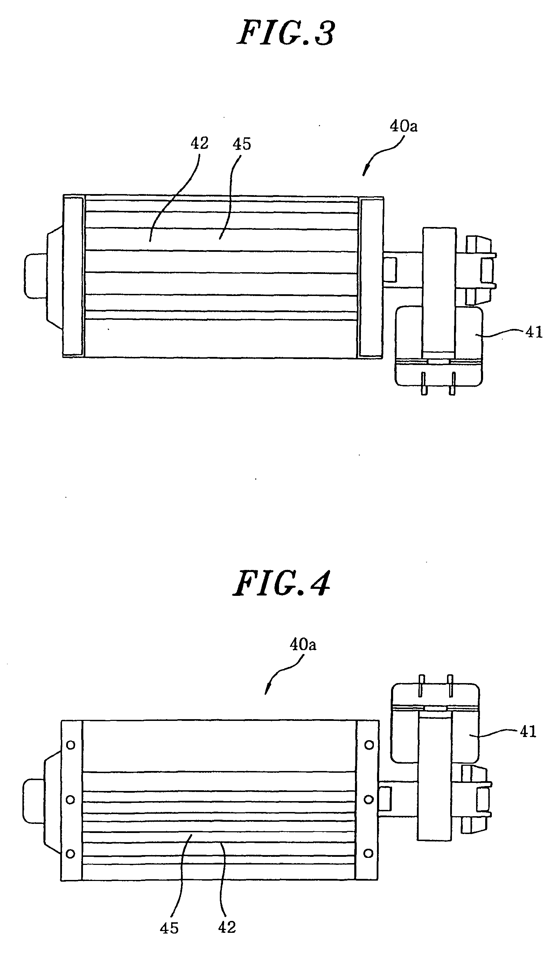

A preferred embodiment of the present invention will now be described in detail with reference to the accompanying drawings, wherein like parts appearing Figs. 3 to 5 are represented by like reference numerals.

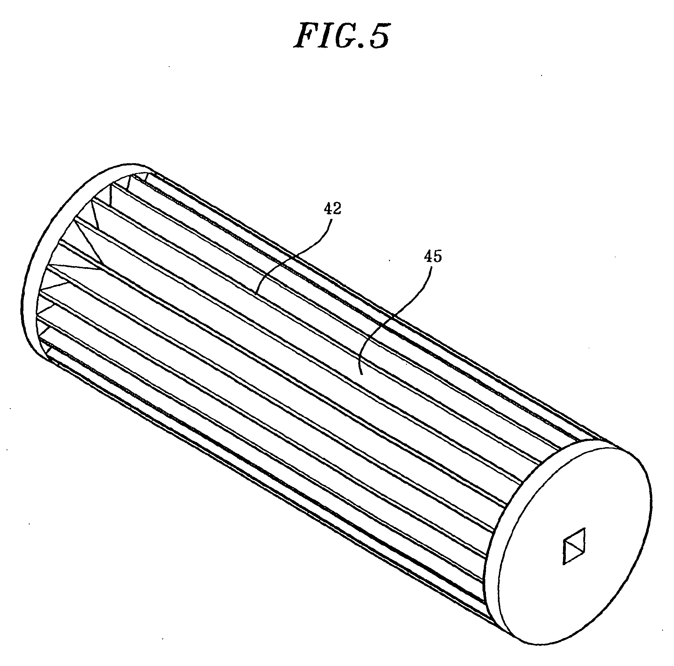

Fig. 3 is a top view of a blower for use in an air purification apparatus in accordance with a preferred embodiment of the present invention; Fig. 4 is a bottom view of the blower shown in Fig. 3; and Fig. 5 is a perspective view of a blade assembly of the blower shown in Fig. 3.

As shown in the drawings, a blower 40a for use in an air purification apparatus in accordance with the preferred embodiment of the present invention includes a plurality of blades 42 rotated by a motor 41, and an ozone decomposition catalyst layer 45 formed on surfaces of each blade 42.

The ozone decomposition catalyst layer 45 is formed of at least one kind of ozone decomposition catalysts, metal oxides, selected from a group consisting of MnO₂, NiO, CoO, CuO, Fe₂O₃, V₂O₅, AgO₂ and the like, and it is more preferable to form the ozone decomposition catalyst layer 45 by using a mixture of various metal oxides, such as MnO₂-CuO, MnO₂-AgO₂, NiO-CoO-AgO₂ and the like, than by using only one metal oxide.

The ozone decomposition catalyst layer 45 on the blade 42 is formed as follows: First, the blade 42 made of metal is submerged into a liquid containing an ozone decomposition catalyst for 30 minutes to 1 hour and half, and then heated to be dried for 4 to 6 hours at a temperature range from 100 to 150°C. After that, the blade 42 is calcinated for an hour and half to 2 hours and half at a temperature range from 300 to 550°C, to thereby obtain the blade 42 having the ozone decomposition catalyst layer 45 formed thereon.

When the blades 42, on which the ozone decomposition catalyst layer 45 are formed, are rotated by the motor 41, purified air in the air purification apparatus is blown to the indoor room through the air discharge holes 1 and contaminated air in the indoor room is drawn into the air purification apparatus. At this time, the air blown by the blower 40a strongly collides with the ozone decomposition catalyst layers 45 formed on surfaces of blades 42 of the blade assembly. By such strong collision, the ozone decomposition catalyst layers 45 are brought into contact effectively and physically with ozone contained in air to decompose ozone. Therefore, in accordance with the present invention, effect of ozone decomposition is very high.

### Experiment

Table 1 shows comparison of ozone concentrations measured in a closed space of 0.4 m³ at every 45 minutes for 180 minutes between a case where the ozone decomposition catalyst layers 45 are formed on the blades 42 and another case where any ozone decomposition catalyst layer is not formed on the blades 42.

In this experiment, the ozone decomposition catalyst layer was formed as follows: MnO₂-CuO was used as an ozone decomposition catalyst. Mn(NO₃)₂ was mixed in a ratio of 8:2 with Cu(NO₃)₂, and water as a solvent was added until the liquid concentration became 70%. Then, the blade assembly with the blades had been submerged in the thus prepared liquid for an hour. Next, the blade assembly was removed from the liquid and had been dried for 5 hours at 100°C. After that, the blade assembly had been calcinated for 2 hours at 500°C, to thereby form the ozone decomposition catalyst layers thereon.

While the calcination process had been performed for 2 hours at 500°C, the following chemical reactions take place, so that Mn(NO₃)₂-Cu(NO₃)₂ is changed into MnO₂-CuO to form the ozone decomposition catalyst layer.

### [chemical reactions]

Mn (NO₃)₂ -> MnO₂ + 2NO₂

2Cu (NO₃)₂ -> 2CuO + 4NO₂ + O₂

Further, the experiment was conducted at 25°C under atmosphere pressure, and the blade assembly used in the experiment was 180 mm in length and 60 mm in diameter. The rotational speed of the blade assembly was about 1,700rpm.

As indicated in Table 1, the ozone concentration measured after 3-hour operation of an air purification apparatus including the blades with the ozone decomposition catalyst layers was about 6% of that by an air purification apparatus including blades without any ozone decomposition catalyst layer.

**Table 1**

| Time (min.) | Ozone concentration (ppm) | |
|---|---|---|
| | Blades **without** ozone decomposition catalyst layer | Blades **with** ozone decomposition catalyst layer |
| 0 | 0 | 0 |
| 45 | 0.8 | 0.1 |
| 90 | 1.2 | 0.1 |
| 180 | 1.6 | 0.1 |

As described above, in a case where a blower having blades with ozone decomposition catalyst layers is used in an air purification apparatus, ozone concentration of purified air is decreased considerably when compared to another case where a blower having blades without any ozone decomposition catalyst layer is used in an air purification apparatus. Moreover, since the ozone decomposition catalyst layers are formed on the blades, the ozone decomposition process can be conducted without any air flow blocking effect in the air purification apparatus.

Accordingly, by using an air purification apparatus with a blower constructed in accordance with the preferred embodiment of the present invention, it is possible to reduce ozone concentration of an indoor room considerably, so that the air in the indoor room obtains safety of not being harmful to human body and that indoor environment is maintained pleasant.

While the invention has been shown and described with respect to the preferred embodiments, it will be understood by those skilled in the art that various changes and modifications may be made without departing from the scope of the invention as defined in the following claims.

## Claims

1. A blower for use in an air purification apparatus, comprising:
at least one blade for blowing air; and
an ozone decomposition catalyst layer formed on at least one portion of the blade.

2. The blower of claim 1, wherein the ozone decomposition catalyst layer is formed as follows: the blade is submerged into a liquid containing at least one ozone decomposition catalyst for 30 minutes to an hour and half, then is heated for 4 to 6 hours at 100 to 150°C, and then is calcinated for an hour and half to 2 hours and half at 300 to 550°C.
